# EUROPEAN PATENT APPLICATION

(11) **EP 4 813 667 A1**
(43) Date of publication of application: **30.09.2026**
(21) Application number: 25211768.4
(22) Date of filing: 28.10.2025
(51) Int. Cl.: B60B 1/02, B60B 1/04, B60B 21/06, B60B 21/10, B60B 27/00

(54) **WIRE-SPOKE WHEEL AND STRADDLED VEHICLE**

(30) Priority: 24.03.2025 JP 2025048658
(71) Applicant: Yamaha Hatsudoki Kabushiki Kaisha, Iwata-shi, Shizuoka 438-8501 (JP)
(72) Inventor: YAMAURA, Daichi, Iwata-shi, 4388501 (JP)
(74) Representative: Studio Torta S.p.A.

(57) **Abstract**

There is disclosed a wire-spoke wheel includes a rim (10), a hub (20), and a plurality of wire spokes (30); the rim (10) including a first flange portion (11A) that is located at an end on one side of a wheel width direction and a second flange portion (11B) that is located at an end on another side of the wheel width direction (D1); the rim (10) having a plurality of rim holes (19) through which respective wire spokes (30) are inserted; the plurality of rim holes (19) including first rim holes (19A) that are made in the first flange portion (11A) and second rim holes (19A) that are made in the second flange portion (11B); each first rim hole (19A) and each second rim hole (19B) are symmetrically shaped with respect to a central plane concerning a width direction (Pr) of the rim (10).

## Description

### Technical Field:

The present disclosure relates to a wire-spoke wheel and a straddled vehicle

### Background art

As a type of wheels for use in motorcycles and other vehicles, wire-spoke wheels are known in which a rim and a hub are linked by a plurality of wire spokes. Wire-spoke wheels have the advantage of good shock absorption.

A wire-spoke wheel may adopt a structure in which wire spokes that link together a right flange portion of the rim and a left side of the hub and wire spokes that link together a left flange portion of the rim and a right side of the hub are mixedly present. In the present specification, this structure is referred to as a "cross structure". A wire-spoke wheel having a cross structure is disclosed in Japanese Laid-Open Patent Publication No. 2005-349857 (hereinafter "Patent Document 1"), for example. Adopting a cross structure allows each wire spoke to be lengthened, whereby the shock absorption property of the wire-spoke wheel can be further improved.

The inventor has conducted various studies concerning wire-spoke wheels having a cross structure. It was consequently found that, as will be described later, the kinds of wire spokes to be used may increase depending on the actual configuration adopted, thereby resulting in an increased number of parts.

### Object of the invention

The present disclosure has been made in view of the above problem, and an objective thereof is to provide a wire-spoke wheel that can suppress an increase in the number of parts.

The present specification discloses wire-spoke wheels and straddled vehicles as recited in the following Items.

### [Item 1]

A wire-spoke wheel comprising:
an annular rim;
a hub having a wheel shaft hole in which a wheel shaft is inserted; and
a plurality of wire spokes linking the rim and the hub together, the plurality of wire spokes each including a first end that is connected to the rim and a second end that is connected to the hub,
the rim including a first flange portion that is located at an end on one side of a wheel width direction and a second flange portion that is located at an end on another side of the wheel width direction, wherein:
   the rim has a plurality of rim holes through which respective ones of the plurality of wire spokes are inserted,
   the plurality of rim holes include first rim holes that are made in the first flange portion and second rim holes that are made in the second flange portion; and
   each first rim hole and each second rim hole are symmetrically shaped with respect to a central plane concerning a width direction of the rim.

In a wire-spoke wheel according to an embodiment of the present invention, each first rim hole (e.g., the right rim hole) made in the first flange portion (e.g., the right flange portion) of the rim and each second rim hole (e.g., the left rim hole) made in the second flange portion (e.g., the left flange portion) of the rim are asymmetrically shaped with respect to the central plane concerning the width direction of the rim. When the hub has a certain structure (e.g., when the hub has a left-right asymmetric structure), the kinds of wire spokes to be used may increase, thereby resulting in an increased number of parts; however, each first rim hole and each second rim hole being asymmetrically shaped allows for suppressing an increase in the number of parts.

### [Item 2]

The wire-spoke wheel of Item 1, wherein an axial direction of each first rim hole and an axial direction of each second rim hole make mutually different angles with the central plane concerning the width direction of the rim.

Typically, the axial direction of each first rim hole and the axial direction of each second rim hole make mutually different angles with the central plane concerning the width direction of the rim, such that each first rim hole and each second rim hole are asymmetrically shaped.

### [Item 3]

The wire-spoke wheel of Item 1 or 2, wherein:
the hub includes a first hub subsection that is located on the one side of a center along the wheel width direction and a second hub subsection that is located on the other side of the center along the wheel width direction; and
the plurality of wire spokes include a plurality of spoke pairs each consisting of: a first wire spoke linking together the first flange portion and the second hub subsection; and a second wire spoke linking together the second flange portion and the first hub subsection.

The wire-spoke wheel may be structured so that the plurality of wire spokes include a plurality of spoke pairs each consisting of: a first wire spoke linking together the first flange portion (e.g., the right flange portion) of the rim and the second hub subsection (e.g., the left hub subsection) of the hub; and a second wire spoke linking together the second flange portion (e.g., the left flange portion) of the rim and the first hub subsection (e.g., the right hub subsection) of the hub. Because the wire-spoke wheel has such a structure (referred to as a "cross structure"), the wire spokes can be made longer than in the case where a cross structure is not adopted, whereby energy absorption by the wire spokes increases and shock absorption is improved.

### [Item 4]

The wire-spoke wheel of Item 3, wherein each of the plurality of wire spokes is bent at either a first angle θ1 and a second angle θ2 which is different from the first angle θ1.

Each wire spoke may be bent at either a first angle θ1 and a second angle θ2 which is different from the first angle θ1. In other words, two kinds of wire spokes with respectively different bending angles may be mixedly present. This makes it easy to avoid interferences between the wire spokes when adopting a cross structure.

### [Item 5]

The wire-spoke wheel of any of Items 1 to 4, wherein the hub has an asymmetric shape with respect to the central plane concerning the width direction of the rim.

The hub may have an asymmetric (i.e., a left-right asymmetric) shape with respect to the central plane concerning the width direction of the rim.

### [Item 6]

The wire-spoke wheel of any of Items 1 to 5, wherein an axial direction of each of the plurality of rim holes is set so that each of the plurality of wire spokes appears to be in a straight line in a plan view from a wheel width direction.

When the axial direction of each rim hole is set so that each wire spoke appears to be in a straight line in a plan view from the wheel width direction, a design improvement can be obtained. An improved assembly ease can also be obtained.

### [Item 7]

The wire-spoke wheel of any of Items 1 to 6, further comprising a plurality of nipples that fasten the second ends of respective ones of the plurality of wire spokes to the hub,
each of the plurality of nipples having:
a tube-shaped stem and
a head that is continuous with one end of the stem.

The wire-spoke wheel may further include a plurality of nipples that fasten the second ends of the respective wire spokes to the hub. Each nipple may have a tube-shaped stem and a head that is continuous with one end of the stem.

### [Item 8]

The wire-spoke wheel of Item 7, further comprising a cover member that is attached to the hub so as to at least partially cover the heads of the plurality of nipples.

When the wire-spoke wheel includes a cover member that is attached to the hub so as to at least partially cover the heads of the nipples, the nipples can be prevented from dropping off even when the nipples become loose.

### [Item 9]

The wire-spoke wheel of Item 8, wherein the cover member doubles as a rotor for wheel speed detection.

In a case where a rotor for wheel speed detection for ABS control is attached to the hub, the cover member doubling as a rotor for wheel speed detection allows the number of parts to be reduced.

### [Item 10]

The wire-spoke wheel of any of Items 7 to 9, wherein the plurality of nipples include two nipples juxtaposed to each other, such that an attachment path for one nipple is overlapped by the other nipple.

The plurality of nipples may include two nipples juxtaposed to each other, such that an attachment path for one nipple (hereinafter referred to as a "first nipple") is overlapped by the other nipple (hereinafter referred to as a "second nipple"). When two nipples juxtaposed to each other are placed in this manner, loosening of the first nipple can be prevented by the second nipple.

### [Item 11]

The wire-spoke wheel of any of Items 7 to 10, wherein:
the hub includes:
a plurality of disc boss portions for attaching a brake disc and
a plurality of nipple boss portions for attaching the plurality of nipples; and
each of the plurality of disc boss portions is integrated with a number of nipple boss portions among the plurality of nipple boss portions.

The hub may include a plurality of disc boss portions for attaching a brake disc and a plurality of nipple boss portions for attaching the plurality of nipples. In that case, if each disc boss portion is integrated with a number of nipple boss portions among the plurality of nipple boss portions, it is possible to reduce the weight of the hub.

### [Item 12]

A straddled vehicle comprising:
a front wheel; and
a rear wheel, wherein
the rear wheel comprises the wire-spoke wheel of any of Items 1 to 11.

According to embodiments of the present invention, a wire-spoke wheel that can suppress an increase in the number of parts can be provided.

### Brief description of the drawings

FIG. 1A is a side view of a wire-spoke wheel 100 according to an embodiment of the present invention as viewed from the left side.
FIG. **1B** is a side view of the wire-spoke wheel **100** as viewed from the left side, where some members are omitted from illustration.
FIG. **2A** is a side view of the wire-spoke wheel **100** as viewed from the right side.
FIG. **2B** is a side view of the wire-spoke wheel **100** as viewed from the right side, where some members are omitted from illustration.
FIG. **3** is a perspective view of the wire-spoke wheel **100** as viewed from the left side.
FIG. **4** is a perspective view of the wire-spoke wheel **100** as viewed from the right side.
FIG. **5** is a cross-sectional view showing the wire-spoke wheel **100,** depicting a cross section along line **5A-5A'** in FIG. **1****.**
FIG. **6A** is a plan view showing a wire spoke **30,** among a plurality of wire spokes **30** of the wire-spoke wheel **100.**
FIG. **6B** is a plan view showing another wire spoke **30** among the plurality of wire spokes **30.**
FIG. **7** is a plan view showing a nipple **50** of the wire-spoke wheel **100.**
FIG. **8** is a cross-sectional view showing places in the rim **10** of the wire-spoke wheel **100** where rim holes **19** are made.
FIG. **9** is a side view of the wire-spoke wheel **100** as viewed from the left side.
FIG. **10** is a cross-sectional view showing enlarged the vicinity of a rim hole **19** in a flange portion **11** of the rim **10.**
FIG. **11** is a side view of the wire-spoke wheel **100** as viewed from the left side, showing an example configuration where the axial direction of each rim hole **19** is toward a center axis **CA1** of a wheel shaft hole **20b.**
FIG. **12** is a diagram showing an example configuration where the axial direction of each rim hole **19** is not toward the center axis **CA1** of the wheel shaft hole **20b.**
FIG. **13** is a plan view showing an example preferable configuration of a nipple **50.**
FIG. **14** is a perspective view showing an example arrangement of wire spokes **30** that are fastened by nipples **50** of the configuration shown in FIG. **13****.**
FIG. **15** is a perspective view of the wire-spoke wheel **100** having cover members **60,** as viewed from the left side.
FIG. **16** is a perspective view of the wire-spoke wheel **100** having cover members **60,** as viewed from the right side.
FIG. **17** is a diagram showing enlarged a portion within FIG. **15****.**
FIG. **18** is a cross-sectional view showing enlarged a portion of the wire-spoke wheel **100** having cover members **60.**
FIG. **19** is a perspective view showing enlarged a portion within FIG. **16****.**
FIG. **20** is a cross-sectional view showing the wire-spoke wheel **100** having cover members **60.**
FIG. **21** is a side view showing the vicinity of a hub **20** of the wire-spoke wheel **100.**
FIG. **22** is a perspective view as viewed from a direction indicated by arrow **A,** showing enlarged a portion within FIG. **21****.**
FIG. **23** is a side view showing the vicinity of the hub **20** of the wire-spoke wheel **100.**
FIG. **24** is a perspective view showing enlarged a portion within FIG. **23****.**
FIG. **25** is a side view showing an example of a straddled vehicle (motorcycle **200)** with wire-spoke wheels according to an embodiment of the present invention.

### Embodiments of the invention

Hereinafter, with reference to the drawings, embodiments of the present invention will be described. Note that the present invention is not limited to the following embodiments.

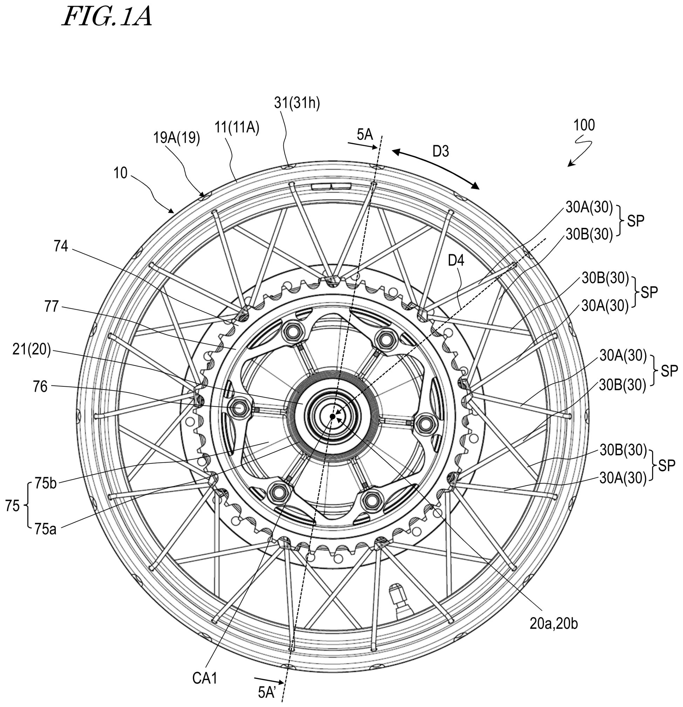

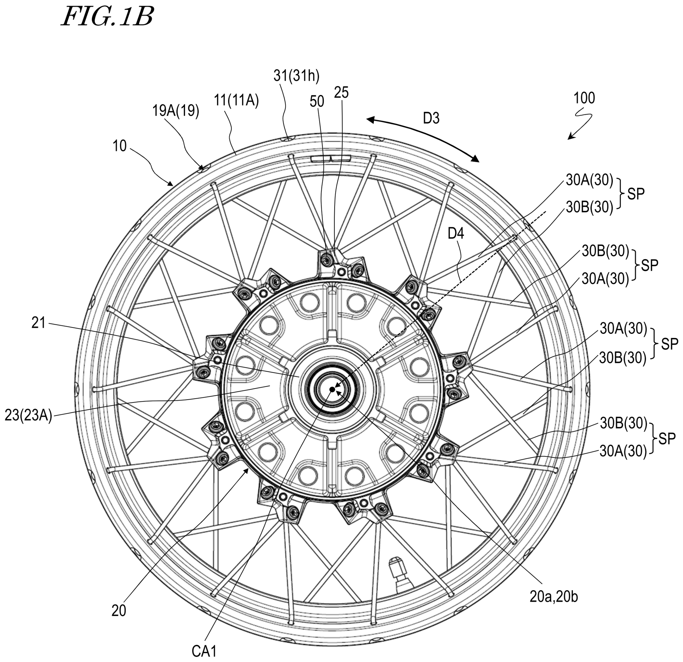

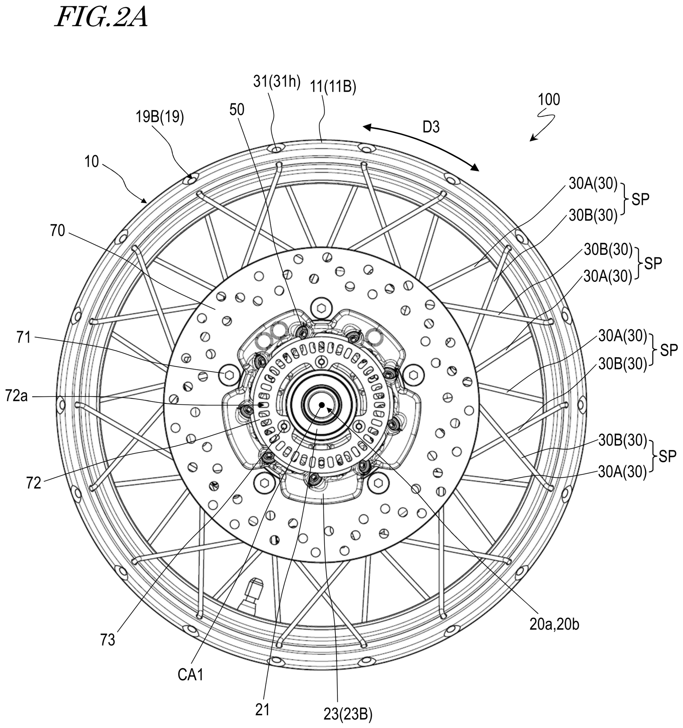

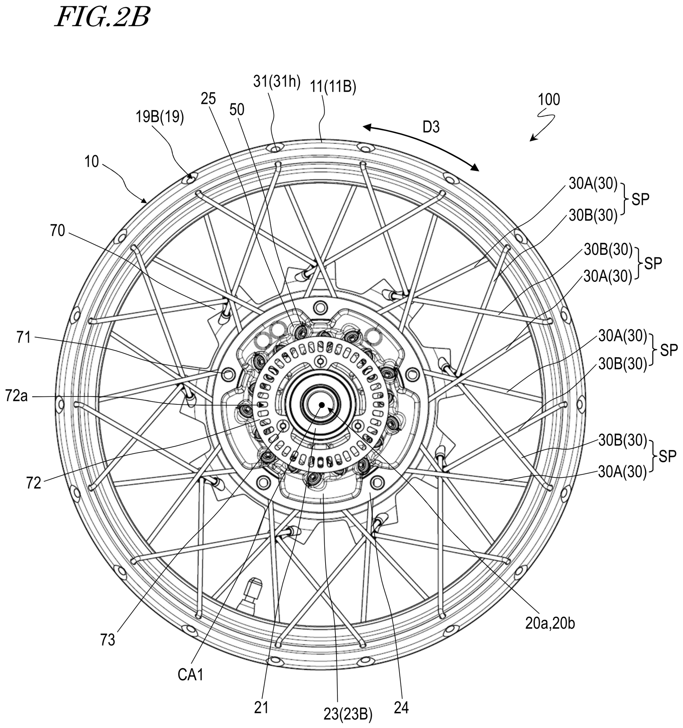

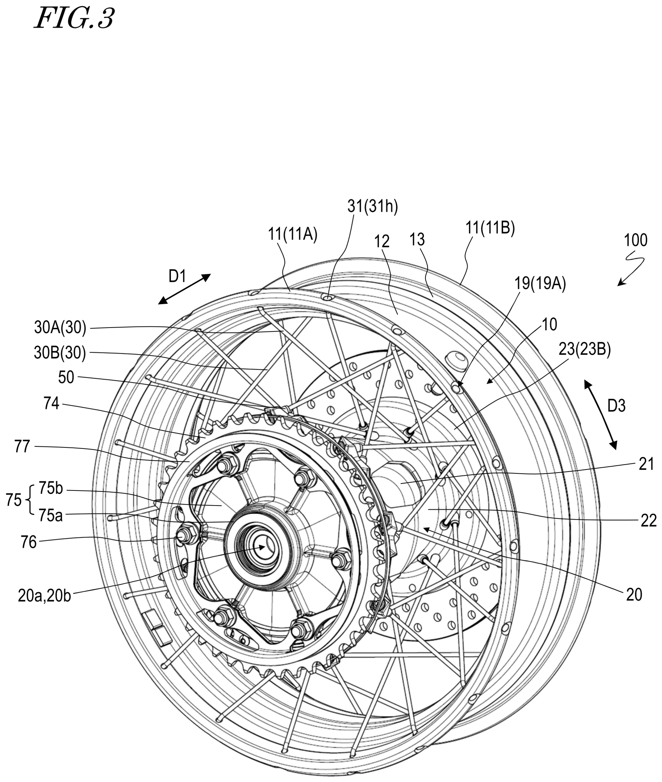

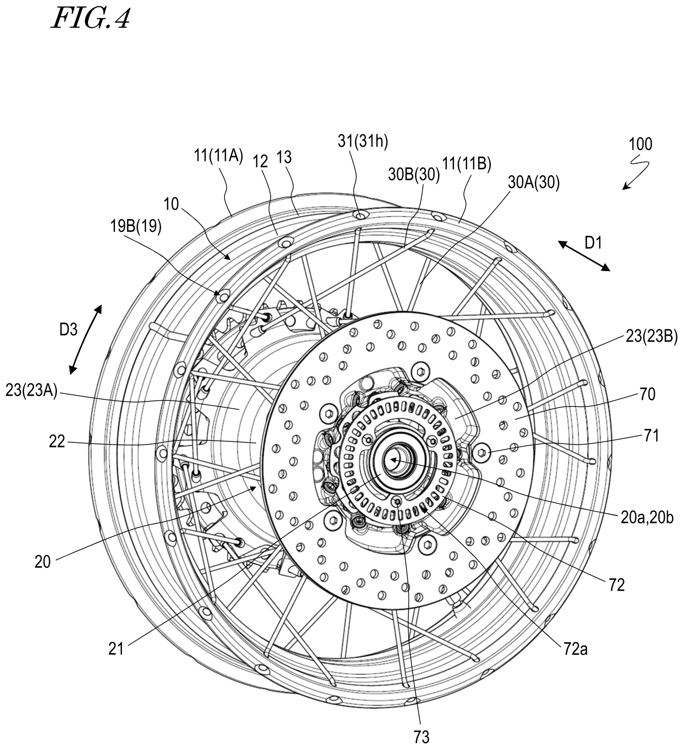

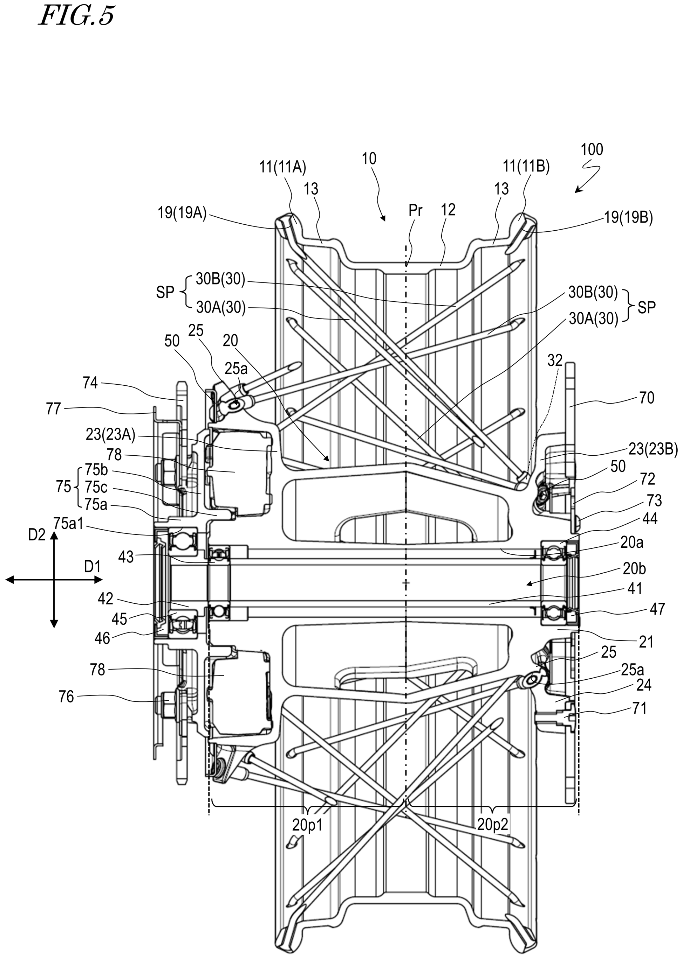

First, with reference to FIG. **1A** to FIG. **5****,** the structure of a wire-spoke wheel (hereinafter simply referred to as a "wheel") **100** according to an embodiment of the present invention will be described. The wheel **100** is suitably used for the rear wheel of a motorcycle, for example. FIG. **1A** and FIG. **1B** are side views showing the wheel **100** as viewed from the left side. However, some members are omitted from illustration in FIG. **1B****.** FIG. **2A** and FIG. **2B** are side views showing the wheel **100** as viewed from the right side. However, some members are omitted from illustration in FIG. **2B****.** FIG. **3** and FIG. **4** are perspective views showing the wheel **100** from the left side and the right side, respectively. FIG. **5** is a cross-sectional view showing the wheel **100,** depicting a cross section along line **5A-5A'** in FIG. **1A****.**

As shown in FIG. **1A** to FIG. **5****,** the wheel **100** includes a rim **10,** a hub **20,** and a plurality of wire spokes **30.**

The rim **10** has an annular shape, extending in a wheel circumference direction **D3.** A tire is mounted on the rim **10.** The rim **10** is made of a metal material (e.g., an aluminum alloy). The rim **10** includes a pair of flange portions **11,** a well portion **12,** and a pair of bead seat portions **13.**

The pair of flange portions **11** are located at both ends of the wheel width direction **D1** of the rim **10.** Hereinafter, regarding the pair of flange portions **11,** a flange portion **11A** that is located on the left side of the wheel width direction **D1** (i.e., an end on one side) will be referred to a "first flange portion" or a "left flange portion", whereas a flange portion **11B** that is located on the right side of the wheel width direction **D1** (i.e., at an end on another side) will be referred to a "second flange portion" or a "right flange portion". The left flange portion **11A** and the right flange portion **11B** each extend outward along the wheel radius direction **D2.**

The well portion **12** is located in the middle of the wheel width direction **D1** of the rim **10.** The well portion **12** is dented inward along the wheel radius direction **D2.**

The bead seat portions **13** are located between the left flange portion **11A** and the well portion **12,** and between the right flange portion **11B** and the well portion **12.** The bead seat portions **13** are portions that support bead portions of the tire.

The rim **10** includes a plurality of rim holes **19** through which the respective wire spokes **30** are inserted. The plurality of rim holes **19** include first rim holes (left rim holes) **19A** made in the first flange portion **11A** and second rim holes (right rim holes) **19B** made in the second flange portion **11B.**

The hub **20** is located in the center of the wheel **100.** The hub **20** includes a throughhole **20a.** The hub **20** is made of a metal material (e.g., an aluminum alloy).

The hub **20** includes an inner cylindrical portion **21,** an outer cylindrical portion **22,** and a pair of hub flange portions **23.**

The inner cylindrical portion **21** is a cylindrical portion that includes the throughhole **20a.** The outer cylindrical portion **22** is a cylindrical portion that is located outward of the inner cylindrical portion **21** along the wheel radius direction **D2.**

The pair of hub flange portions **23** are portions extending outward (along the wheel radius direction **D2**) from the inner cylindrical portion **21.** The pair of hub flange portions **23** include a left hub flange portion **23A** that is located on the left side and a right hub flange portion **23B** that is located on the right side. The outer cylindrical portion **22** connects the left hub flange portion **23A** and the right hub flange portion **23B.**

A brake disc **70** is disposed on the right side of the hub **20.** The right flange portion **23B** includes a plurality of disc boss portions **24** for attaching the brake disc **70,** such that the brake disc **70** is fastened to the disc boss portion **24** via a plurality of bolts **71.**

On the right side of the hub **20,** a rotor for wheel speed detection **72** is also disposed. The rotor **72** has a plurality of slits **72a** that are disposed at an equal pitch along the wheel circumference direction **D3.** The detected wheel speed is used for controlling the ABS (Anti-lock Braking System), for example. The rotor **72** is attached to the right flange portion **23B** via a plurality of bolts **73.**

On the left side of the hub **20,** a driven sprocket **74** is disposed. A chain (not shown) is wound around the driven sprocket **74.** The driven sprocket **74** is attached to the clutch hub **75.**

The clutch hub **75** includes a boss portion **75a** and a ring portion **75b.** The boss portion **75a** includes a throughhole **75a1** that is continuous with the throughhole **20a** of the inner cylindrical portion **21.** The ring portion **75b** is ringshaped, and extends outward (along the wheel radius direction **D2**) from the boss portion **75a.** The driven sprocket **74** is fastened to the ring portion **75b** via a plurality of bolts **76.**

Furthermore, an annular part **77** is attached to the clutch hub **75.** When the chain becomes disengaged from the driven sprocket **74** during travel, the annular part **77** functions to prevent the chain from getting caught to result in a tire locking. In the illustrated example, the annular part **77** is fastened to the ring portion **75b** via the same bolts **76** as the driven sprocket **74.**

Between the ring portion **75b** of the clutch hub **75** and the left hub flange portion **23A,** a plurality of hub dampers **78** are disposed. The clutch hub **75** further includes a spigot portion **75c** that extends inward along the wheel width direction **D1** so as to fit in the left end of the inner cylindrical portion **21** of the hub **20,** such that the clutch hub **75** is fixed to the hub **20** via the spigot portion **75c.**

In the throughhole **20a** of the hub **20** and the throughhole **75a1** of the clutch hub **75** are disposed: a first collar member **41,** a second collar member **42,** a first bearing **43,** a second bearing **44,** a third bearing **45,** a first sealing member **46,** and a second sealing member **47.**

The first bearing **43** and the second bearing **44** are located near the left end and near the right end, respectively, of the inner cylindrical portion **21** of the hub **20.** The first collar member **41** is cylindrical, and located between the first bearing **43** and the second bearing **44.**

The second collar member **42** is cylindrical, and located on the left side of the first bearing **43.** The third bearing **45** is located between the outer peripheral surface of the second collar member **42** and the inner peripheral surface of the boss portion **75a** of the clutch hub **75.**

The first sealing member **46** is located on the left side of the second collar member **42** and the third bearing **46.** The second sealing member **47** is located on the right side of the second bearing **44.**

The inner peripheral surfaces of the first collar member **41,** the second collar member **42,** the first bearing **43,** and the second bearing **44** define a hole (wheel shaft hole) **20b** in which a wheel shaft is inserted. That is, it may be said that he throughhole **20a** of the hub **20** contain a space to serve as the wheel shaft hole **20b.** The center axis of the wheel shaft hole **20b** is parallel to the wheel width direction **D1.** Note that these members to be disposed in the throughhole **20a** of the hub **20** may be changed as necessary.

The plurality of wire spokes **30** link the rim **10** and the hub **20** together. The wire spokes **30** are made of a metal material (e.g., iron). In the illustrated example, the wheel **100** includes thirty-six wire spokes **30;** however, the number of wire spokes **30** is of course not limited thereto.

In the present specification, regarding both ends of each wire spoke **30,** an end **31** that is connected to the rim **10** will be referred to as a "first end" or a "rim-end", whereas an end **32** that is connected to the hub **20** will be referred to as a "second end" or a "hub-end".

Also in the present specification, within the hub **20,** a portion **20p1** that is located on one side (e.g., the left side herein) of the center (which is defined by a central plane concerning the width direction **Pr** of the rim **10**) along the wheel width direction **D1** is referred to as a "first hub subsection" or a "left hub subsection", whereas a portion **20p2** that is located on another side (e.g., the right side herein) of the center along the wheel width direction **D1** is referred to as a "second hub subsection" or a "right hub subsection". In the present embodiment, the hub **20** has an asymmetric shape with respect to the central plane concerning the width direction **Pr** of the rim **10.** In other words, the first hub subsection **20p1** and the second hub subsection **20p2** have respectively different shapes.

The wheel **100** has a "cross structure" as already described. In other words, the plurality of wire spokes **30** of the wheel **100** include: first wire spokes **30A** that link together the first flange portion (left flange portion) **11A** and the second hub subsection (right hub subsection) **20p2;** and second wire spokes **30B** that link together the second flange portion (right flange portion) **11B** and the first hub subsection (left hub subsection) **20p1.**

Now, a pair **SP** consisting of any first wire spoke **30A** and any second wire spoke **30B** whose rim-ends **31** lie closest to each other will be referred to as a "spoke pair". In the illustrated example, in a plan view from a direction taken parallel to the wheel width direction **D1,** the positions of the rim-ends **31** of the first wire spoke **30A** and the second wire spoke **30B** constituting each spoke pair **SP** (i.e., positions along the wheel circumference direction **D3**) are essentially identical.

Thus, the plurality of wire spokes **30** of the wheel **100** include a plurality of spoke pairs **SP** each constituted by a first wire spoke **30A** and a second wire spoke **30B.**

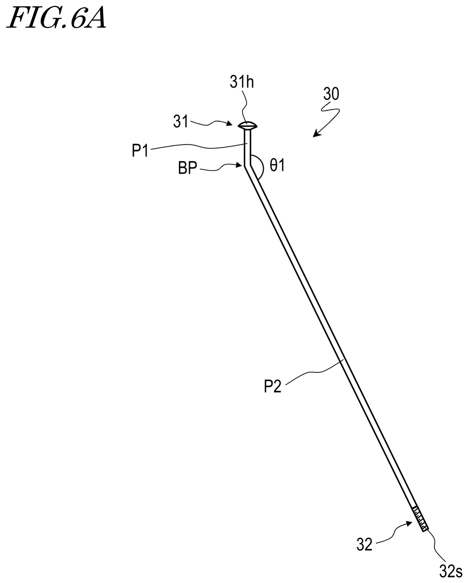

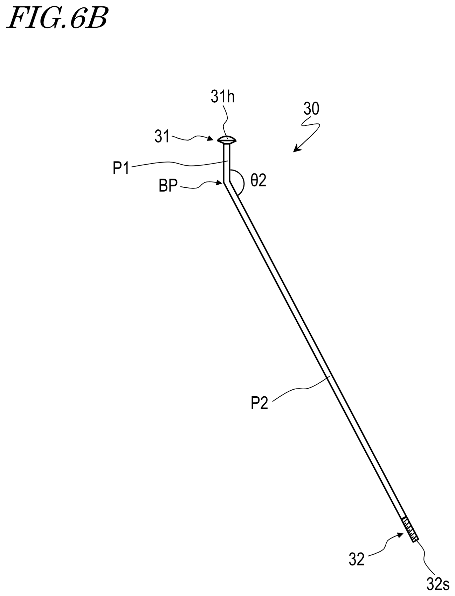

Now, the structure of each wire spoke **30** will be described. FIG. **6A** shows one of a plurality of wire spokes **30,** and FIG. **6B** shows another wire spoke **30.**

As already described, the wire spoke **30** shown in FIG. **6A** and the wire spoke **30** shown in FIG. **6B** each have a rim-end **31** and a hub-end **32.** A spoke head **31h** with an increased diameter is formed at the rim-end **31.** An external thread **32s** is formed at the hub-end **32.** The hub-end **32** of the wire spoke **30** is fastened to the hub **20** via a nipple **50.** In other words, the wheel **100** includes a plurality of nipples **50** that fasten the hub-ends **32** of respective ones of the plurality of wire spokes **30** to the hub **20.**

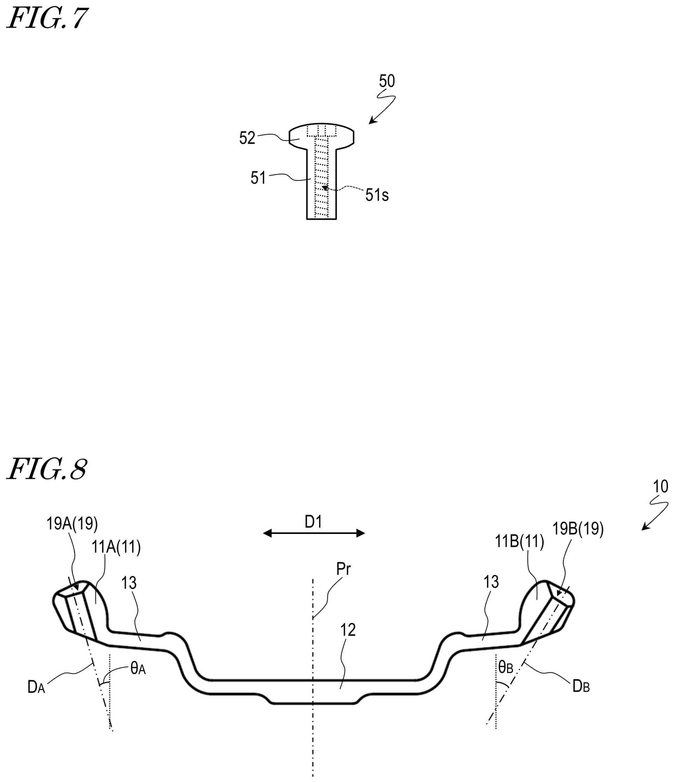

FIG. **7** is a plan view showing a nipple **50.** As shown in FIG. **7****,** the nipple **50** includes a stem **51** and a head **52** that is provided at one end of the stem **51.** The stem **51** has a tube shape, with an internal thread **51s** being formed on the inner peripheral surface of the stem **51.**

As already described, rim holes **19** through which the wire spokes **30** can be inserted are made in the flange portions **11** of the rim **10.** FIG. **8** is a cross-sectional view showing places in the rim **10** where the rim holes **19** are made.

A first wire spoke **30A** is inserted in the first rim hole **19A,** and a second wire spoke **30B** is inserted in the second rim hole **19B.** In FIG. **8****,** the central plane concerning the width direction **Pr** of the rim **10** (which of course is an imaginary plane) is indicated with a dashed line. In the example shown in FIG. **8****,** the first rim hole **19A** and the second rim hole **19B** are asymmetrically shaped with respect to the central plane concerning the width direction **Pr** of the rim **10.** More specifically, an angle θ_{A} that the axial direction **D_{A}** of each first rim hole **19A** makes with the central plane concerning the width direction **Pr** of the rim **10** and an angle θ_{B} that the axial direction **D_{B}** of each second rim hole **19B** makes with the central plane concerning the width direction **Pr** of the rim **10** are different from each other (e.g., in the illustrated example, the angle θ_{A} is smaller than the angle θ_{B}), such that each first rim hole **19A** and each second rim hole **19B** are asymmetrically shaped.

The rim-end **31** of each wire spoke **30** is secured to a flange portion **11** of the rim **10** via the spoke head **31h** (FIGS. **6A****,** **6B**). In each hub flange portions **23** of the hub **20,** a plurality of nipple boss portions **23** (FIG. **1**) are made, in each of which a nipple hole **23a** through which the stem **51** of a nipple **50** is inserted. The hub-end **32** of each wire spoke **30** becomes fastened to the hub flange portions **23** of the hub **20** as its external thread **32s** is screwed into the internal thread **51s** of the nipple **50.**

As shown in FIG. **6A** and FIG. **6B****,** each wire spoke **30** is bent at a position (bent portion **BP**) which is slightly distant from the rim-end **31.** The wire spoke **30** shown in FIG. **6A** is bent at a first angle θ1. On the other hand, the wire spoke **30** shown in FIG. **6B** is bent at a a second angle θ2 which is different from the first angle θ1. Thus, each of the plurality of wire spokes **30** of the wheel **100** is bent at ether the first angle θ1 or the second angle θ2. In other words, regarding the bending angle, the wheel **100** has two kinds of wire spokes **30.**

In the following description, a portion **P1** of a wire spoke **30** that is located between the bent portion **BP** and the rim-end **31** may be referred to as a "first portion", and a portion **P2** that is located between the bent portion **BP** and the hub-end **32** may be referred to as a "second portion". The length of the first portion **P1** is smaller than the length of the second portion **P2,** with a ratio on the order of 1:16 to 1:18 between the length of the first portion **P1** and the length of the second portion **P2,** for example.

In FIG. **1****,** a direction **D4** heading from the rim hole **19** toward the center axis **CA1** of the wheel shaft hole **20b** (hereinafter referred to as the "wheel central direction") is shown. The second portion **P2** of each wire spoke **30** is inclined with respect to the wheel central direction **D4.** In the illustrated example, the second portions **P2** of the first wire spoke **30A** and the second wire spoke **30B** constituting each spoke pair **SP** are inclined in opposite directions relative to the wheel central direction **D4.** Therefore, in a plan view, the positions of the hub-ends **32** of the first wire spoke **30A** and the second wire spoke **30B** constituting each spoke pair **SP** (i.e., positions along the wheel circumference direction **D3**) are different from each other. Moreover, the second portion **P2** of the first wire spoke **30A** of a given spoke pair **SP** and the second portion **P2** of the first wire spoke **30A** of an adjacent spoke pair **SP** to that spoke pair **SP** are inclined in opposite directions relative to the wheel central direction **D4.** Similarly, the second portion **P2** of the second wire spoke **30B** of a given spoke pair **SP** and the second portion **P2** of the second wire spoke **30B** of an adjacent spoke pair **SP** to that spoke pair **SP** are inclined in opposite directions relative to the wheel central direction **D4.** In the illustrated example, the angle that the second portion **P2** of the second wire spoke **30B** makes with the wheel central direction **D4** is greater than the angle that the second portion **P2** of the first wire spoke **30A** makes with the wheel central direction **D4.**

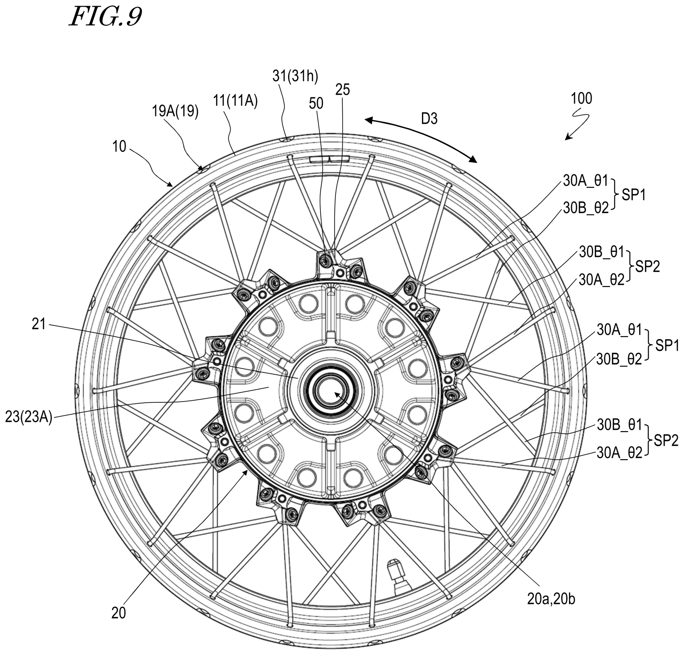

FIG. **9** is a side view showing the wheel **100** as viewed from the left side, in a similar manner to FIG. **1****.** However, for ease of illustration, any first wire spoke **30A** that is bent at the first angle θ1 and any first wire spoke **30A** that is bent at the second angle θ2 are indicated with reference numerals **"30A_θ1"** and **"30A_θ2",** respectively; also, any second wire spoke **30B** that is bent at the first angle θ1 and any second wire spoke **30B** that is bent at the second angle θ2 are indicated with reference numerals **"30B_θ1"** and **"30B_θ2",** respectively.

As shown in FIG. **9****,** the plurality of spoke pairs **SP** of the wheel **100** include: spoke pairs (hereinafter referred to as "first spoke pairs") **SP1** each consisting of a first wire spoke **30A_θ1** that is bent at the first angle θ1 and a second wire spoke **30B_θ2** that is bent at the second angle θ2; and spoke pairs (hereinafter referred to as "second spoke pairs") **SP2** each consisting of a first wire spoke **30A_θ2** that is bent at the second angle θ2 and a second wire spoke **30B_θ1** that is bent at the first angle θ1. Furthermore, the first spoke pairs **SP1** and the second spoke pairs **SP2** are in alternating placement along the wheel circumference direction **D3.**

As described above, the wheel **100** according to an embodiment of the present invention is structured so that the plurality of wire spokes **30** include a plurality of spoke pairs **SP** each consisting of: a first wire spoke **30A** that links together the first flange portion (left flange portion) **11A** of the rim **10** and the second hub subsection (right hub subsection) **20p2** of the hub **20;** and a second wire spoke **30B** that link together the second flange portion (right flange portion) **11B** of the rim **10** and the first hub subsection (left hub subsection) **20p1** of the hub **20.** Because the wheel **100** has such a cross structure, the wire spokes **30** can be made longer than in the case where a cross structure is not adopted, whereby energy absorption by the wire spokes **30** increases and shock absorption is improved.

Moreover, in the wheel **100** according to an embodiment of the present invention, each wire spoke **30** is bent at either the first angle θ1 or the second angle θ2, which is different from the first angle θ1. In other words, two kinds of wire spokes **30** with respectively different bending angles are mixedly present. This makes it easy to avoid interferences between the wire spokes **30** when adopting a cross structure.

Furthermore, in the wheel **100** according to an embodiment of the present invention, each first rim hole **19A** and each second rim hole **19B** are asymmetrically shaped with respect to the central plane concerning the width direction **Pr** of the rim **10.** When the hub **20** has a certain structure (e.g., when the hub **20** has a left-right asymmetric structure as illustrated), the kinds of wire spokes **30** to be used may increase, thereby resulting in an increased number of parts; however, each first rim hole **19A** and each second rim hole **19B** being asymmetrically shaped allows for suppressing an increase in the number of parts. For example, when the wheel **100** according to the present embodiment is modified so that each first rim hole **19A** and each second rim hole **19B** are symmetrically shaped with respect to the central plane concerning the width direction **Pr** of the rim **10,** four kinds of wire spokes **30** (regarding the bending angle) will need to be used. On the other hand, in the present embodiment, where each first rim hole **19A** and each second rim hole **19B** are asymmetrically shaped with respect to the central plane concerning the width direction **Pr** of the rim **10,** only two kinds need to be used.

Although FIG. **1** and the like illustrate examples where the positions of the rim-ends **31** of the first wire spoke **30A** and the second wire spoke **30B** constituting each spoke pair **SP** (i.e., positions along the wheel circumference direction **D3**) are essentially identical in a plan view, these may be shifted from each other.

Hereinafter, examples of preferable configurations, variations, and the like of the wheel **100** will be described.

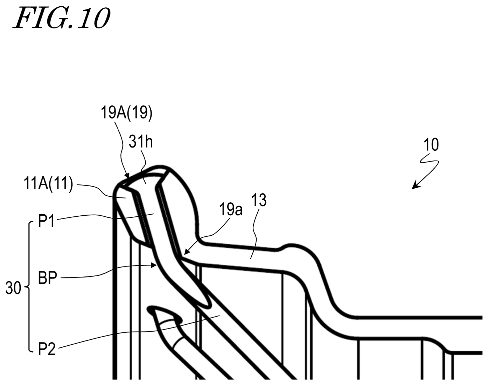

As already described, each wire spoke **30** of the wheel **100** is bent at the bent portion **BP.** As shown in FIG. **10****,** disposing the wire spoke **30** so that the neighborhood of the bent portion **BP** abuts with an edge (the inner edge along the wheel radius direction **D2**) **19a** of the rim hole **19** (i.e., adjusting the position of the bent portion **BP**) ensures that the torque associated with the nipple **50** during fastening is received at the edge **19a** of the rim hole **19,** whereby the wire spoke **30** can be prevented from rotating together. In other words, the edge **19a** of the rim hole **19** can function as a rotation stopper.

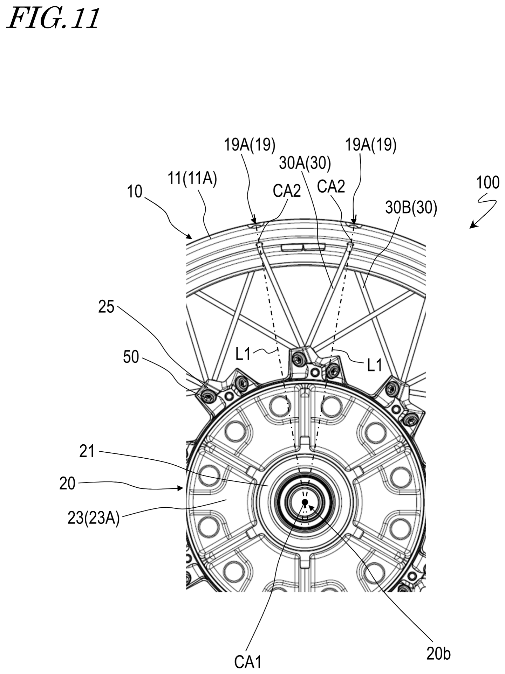

In the configuration illustrated in FIG. **1** and the like, the axial direction of each of the plurality of rim holes **19** is toward the center axis **CA1** of the wheel shaft hole **20b.** In other words, as shown in FIG. **11****,** an extension **L1** of the center axis **CA2** of each rim hole **19** intersects the center axis **CA1** of the wheel shaft hole **20b.** When the axial direction of each rim hole **19** is toward the center axis **CA1** of the wheel shaft hole **20b,** it becomes easier to consecutively form the rim holes **19** in the step of forming a plurality of rim holes **19** in the rim **10** (rim hole formation step), whereby a simplified rim hole formation step is achieved.

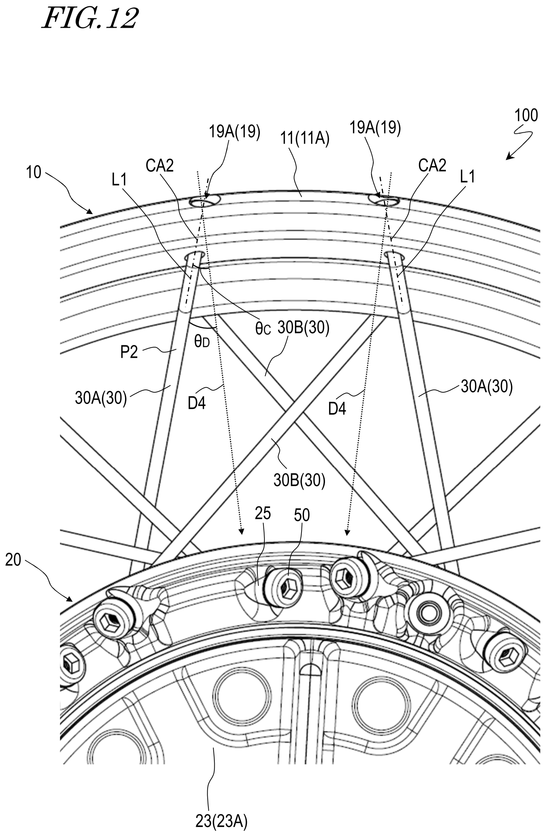

The axial direction of each rim hole **19** may not be toward the center axis **CA1** of the wheel shaft hole **20b.** FIG. **12** shows an example configuration where the axial direction of each rim hole **19** is not toward the center axis **CA1** of the wheel shaft hole **20b.**

In the example shown in FIG. **12****,** the center axis **CA2** of the rim hole **19** and its extension **L1** are not parallel to the wheel central direction **D4,** but are inclined therefrom. Moreover, angles θ_{C} and θ_{D} which the center axis **CA2** of the rim hole **19** and the second portion **P2** of the wire spoke **30** make, respectively, with the wheel central direction **D4** in a plan view from the wheel width direction **D1** are essentially equal to each other, which ensures that each of the plurality of wire spokes **30** appears to be in a straight line in a plan view from the wheel width direction **D1** (i.e., so that the wire spoke **30** avoids being visually perceived as bent at the bent portion **BP**). Thus, because the axial direction of each rim hole **19** is set so that each wire spoke **30** appears to be in a straight line in a plan view, a design improvement can be obtained. An improved assembly ease can also be obtained.

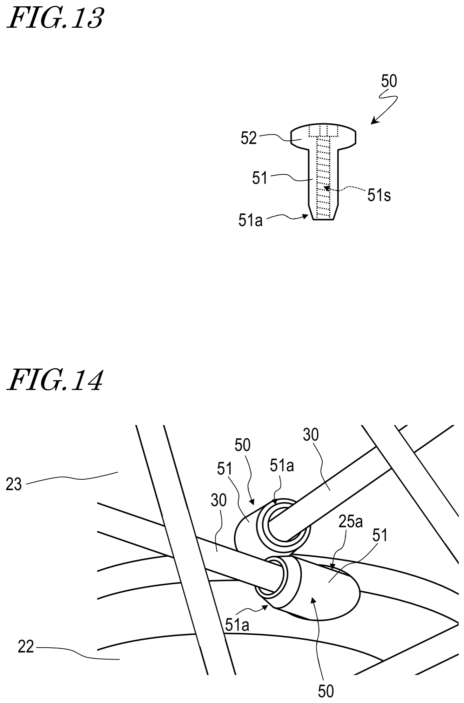

As already described, the wheel **100** includes the plurality of nipples **50,** each of which fastens the hub-end **32** of the respective wire spoke **30** to the hub **20.** FIG. **13** shows an example preferable configuration of a nipple **50.**

In the example shown in FIG. **13****,** the other end (i.e., the end that is not continuous with the head **52**) **51a** of the stem **51** of the nipple **50** has a tapered shape which reduces in diameter toward the leading end. FIG. **14** shows an example arrangement of wire spokes **30** that are fastened by using nipples **50** of such a configuration. FIG. **14** shows an example where wire spokes **30** are disposed so that two nipples **50** are juxtaposed to each other.

In a case where the wire spokes **30** are placed so that nipples **50** are juxtaposed to each other, interferences between the nipples **50** are feared. When the other end **51a** of the stem **51** of each nipple **50** has a tapered shape as aforementioned, interferences between nipples **50** being juxtaposed to each other can be avoided.

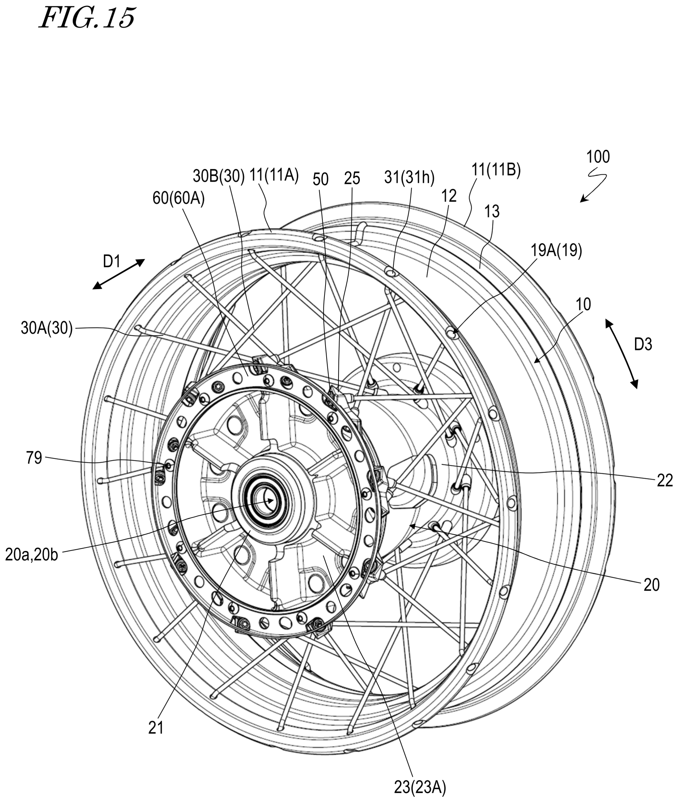

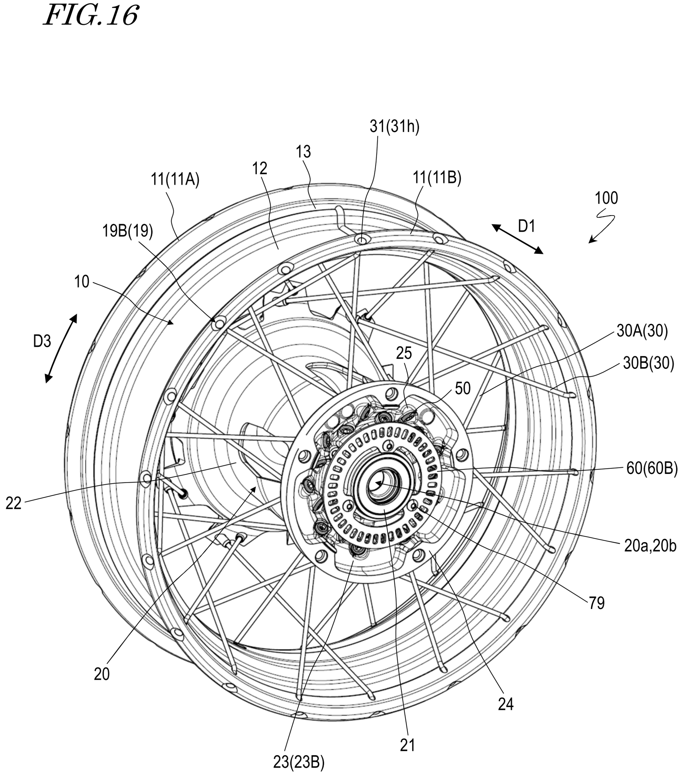

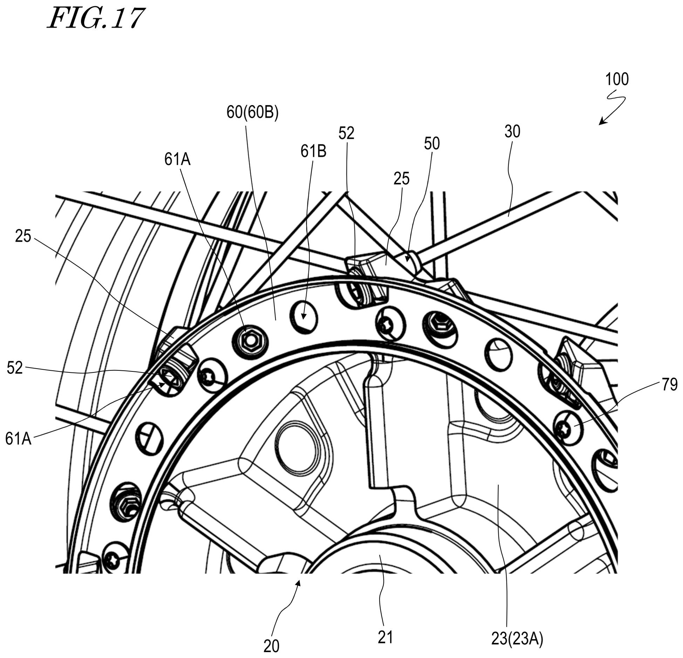

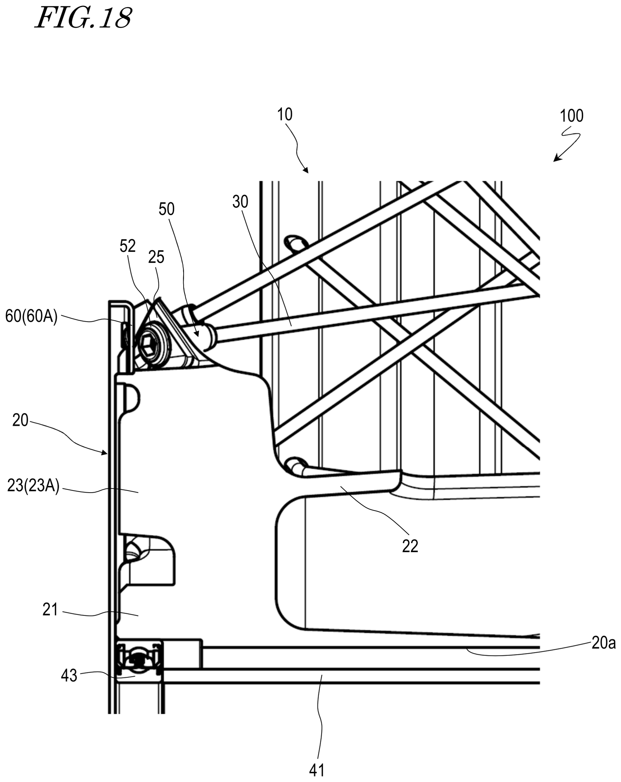

The wheel **100** may have a configuration that can prevent dropping off of the nipples **50.** With reference to FIG. **15** to FIG. **18****,** an example of such a wheel **100** will be described. FIG. **15** and FIG. **16** are perspective views of the wheel **100** as viewed from the left side and the right side, respectively. FIG. **17** is a diagram showing enlarged a portion within FIG. **15****.** FIG. **18** is a cross-sectional view showing enlarged a portion of the wheel **100.**

In the example shown in FIG. **15** and the like, the wheel **100** further includes a pair of cover members **60.** The pair of cover members **60** are attached to the hub **20.** One **60A** (hereinafter also referred to as a "left cover member") of the pair of cover members **60** is attached to the first hub subsection (left hub subsection) **20p1** of the hub **20,** whereas the other **60B** (hereinafter also referred to as a "right cover member") is attached to the second hub subsection (right hub subsection) **20p2** of the hub **20.** In the illustrated example, the cover members **60** are attached to the hub **20** via bolts **79.** Note that attachment of the cover members **60** to the hub **20** is not limited to fastening via the bolts **79.**

In the illustrated example, each cover member **60** has a disk shape. Each cover member **60** is made of a metal material or a resin material, for example.

The left cover member **60A** at least partially covers the heads **52** of a number of nipple **50** (specifically, a half of the nipples **50**) among the plurality of nipples **50.** The right cover member **60B** at least partially covers the heads **52** of the remaining nipples **50.**

Thus, when the wheel **100** includes cover members **60** that are attached to the hub **20** so as to at least partially cover the heads **52** of the nipples **50,** the nipples **50** can be prevented from dropping off even when the nipples **50** become loose. Note that the specific shape of the cover members **60** is not limited to what is illustrated in FIG. **15** and the like, and there are no particular constraints as to the thickness, shape, etc., of the cover members **60.**

Each cover member **60** and the head **52** of a corresponding nipple **50** may be distanced by a predetermined interval, or in contact with each other (i.e., with a zero interval). The interval between the cover member **60** and the head **52** of the nipple **50** is preferably set so that engagement between the nipple **50** and the wire spoke **30** will not be lost (i.e., so that the head **52** of the nipple **50** abuts with the inner surface of the cover member **60** before engagement is lost). This can better prevent loosening of the nipple **50.**

The illustrated left cover member **60A** includes a plurality of first openings **61A** that overlap a tool path for tightening those nipples **50** whose loosening is prevented by the left cover member **60A** (i.e., which are located on the left side of the wheel **100**).

Such first openings **61A** of a cover member **60** (which herein is the left cover member **60A**) allows the nipples **50** to be retightened without having to detach the cover member **60.**

In the illustrated example, the left cover member **60A** further includes a plurality of second openings **61B** that do not overlap with the tool path for tightening the nipples **50.** The second openings **61B** contribute to weight reduction of the wheel **100** (of course, the first openings **61A** also contribute to the weight reduction).

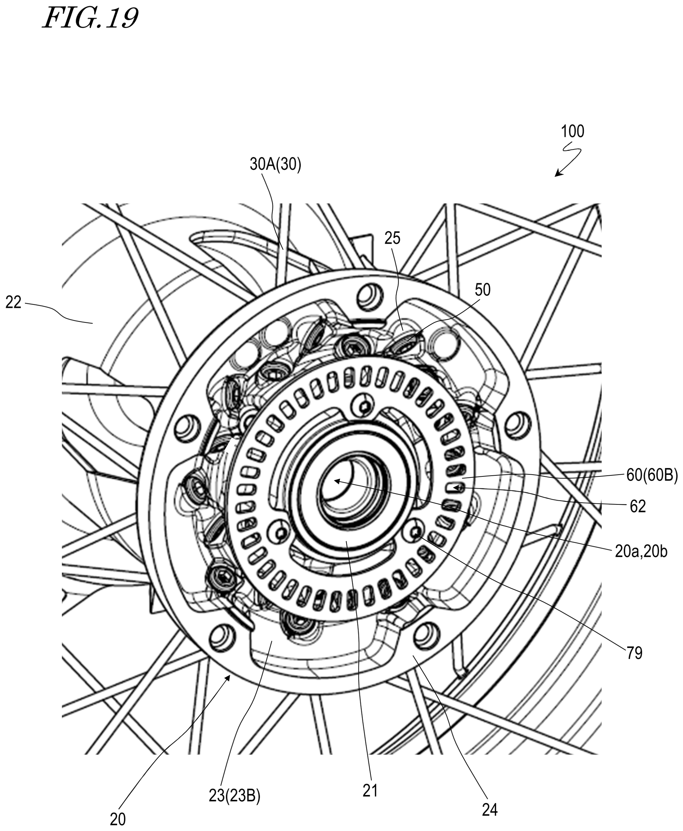

FIG. **19** is a perspective view showing enlarged a portion within FIG. **16****.** The illustrated right cover member **60B** has a plurality of slits **62** that are disposed at an equal pitch along the wheel circumference direction **D3,** thus not only preventing the nipples **50** from dropping off, but also functioning as a rotor for wheel speed detection. The detected wheel speed is used for controlling the ABS (Anti-lock Braking System), for example.

When the cover member **60** (e.g., the right cover member **60B** shown in FIG. **19** and the like) doubles as a rotor for wheel speed detection, it becomes possible to reduce the number of parts.

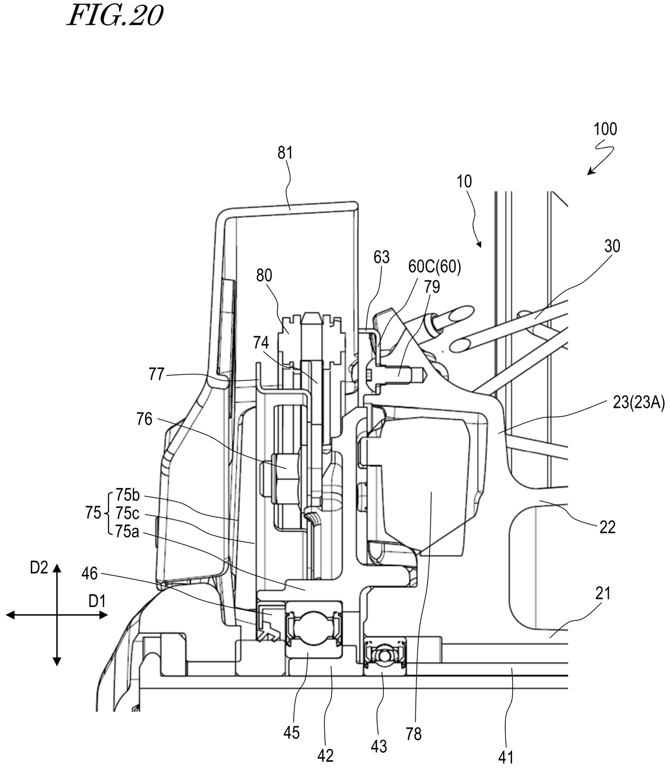

With reference to FIG. **20****,** another example of the cover member **60** will be described. FIG. **20** shows, in addition to the wheel **100,** a chain **80** that is wound around the driven sprocket **74** and a chain case **81** that is disposed so as to cover the chain **80.**

An outer edge **63** of the cover member (left cover member) **60C** shown in FIG. **20** protrude outward along the wheel width direction **D1.** In a case where the chain **80** is disposed around the hub **20,** the chain **80** may get caught when the chain **80** becomes disengaged. Because the outer edge of the cover member **60C** protrudes outward along the wheel width direction **D1,** it is easier for the disengaged chain **80** to revert to the original position, thereby restraining the chain **80** from getting caught.

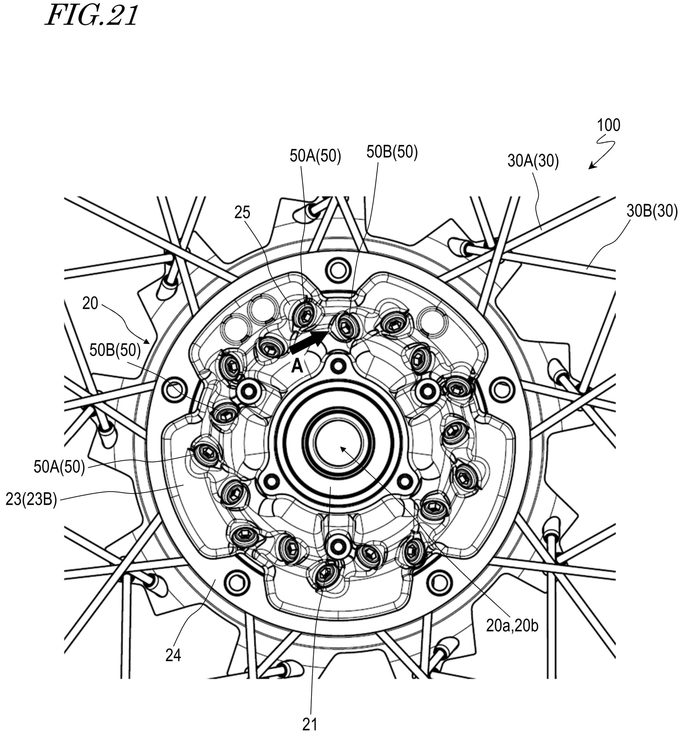

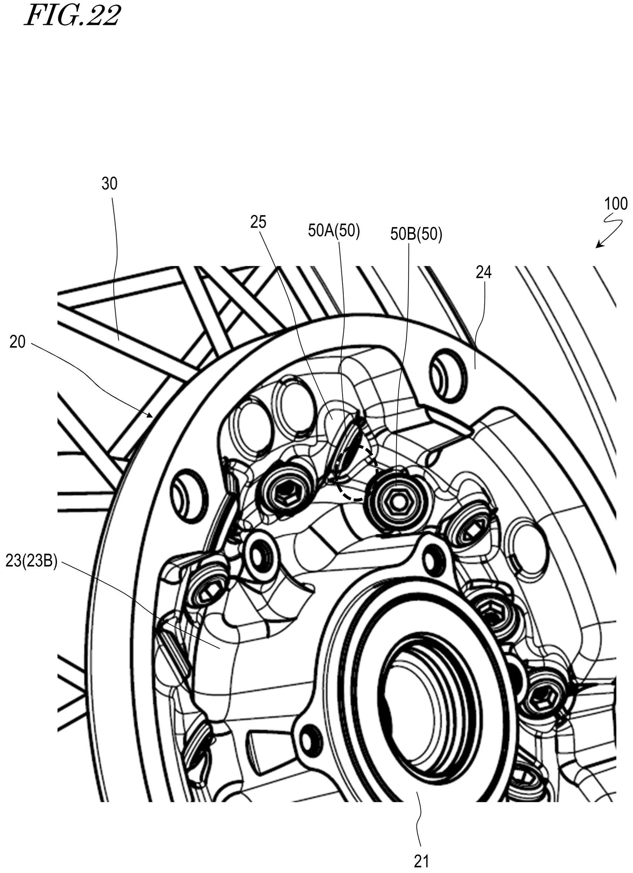

With reference to FIG. **21** and FIG. **22****,** another example configuration that can prevent dropping off of the nipples **50** will be illustrated. FIG. **21** is a side view showing the vicinity of the hub **20** of the wheel **100,** and FIG. **22** is a perspective view as viewed from a direction indicated by arrow **A,** showing enlarged a portion within FIG. **21****.**

Among the plurality of nipples **50** of the wheel **100,** two nipples **50** juxtaposed to each other will be discussed. In the example shown in FIG. **21** and FIG. **22****,** regarding the two nipples **50** juxtaposed to each other, an attachment path (which is a path to be traveled by the nipple **50** during attachment) for one nipple (hereinafter referred to as a "first nipple") **50A** is overlapped by the other nipple (hereinafter referred to as a "second nipple") **50B** (note the region that is surrounded by a dotted ellipse in FIG. **22**). Because two nipples **50** juxtaposed to each other are placed in this manner, loosening of the first nipple **50A** can be prevented by the second nipple **50B.**

Preferably, the interval between the head **52** of the first nipple **50A** and the second nipple **50B** is set so that engagement between the first nipple **50A** and the wire spoke **30** will not be lost (i.e., so that the head **52** of the first nipple **50A** abuts with the second nipple **50B** before engagement is lost). This can better prevent loosening of the first nipple **50A.**

In order to prevent dropping off of the second nipple **50B,** a cover member that at least partially covers the head **52** of the second nipple **50B** may be provided.

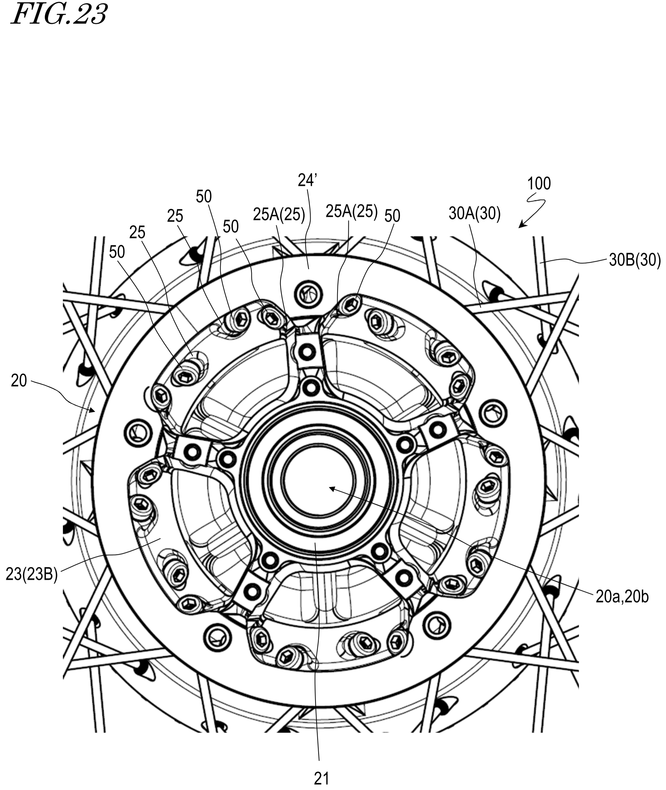

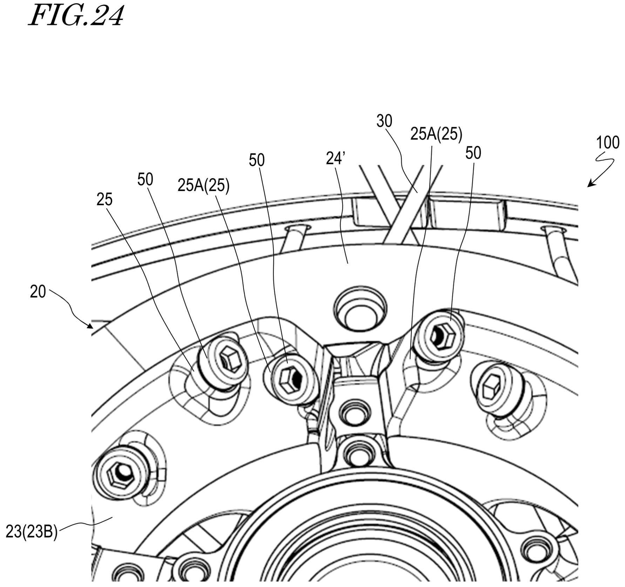

FIG. **23** and FIG. **24** show an example preferable configuration of the hub **20.** FIG. **23** is a side view showing the vicinity of the hub **20** of the wheel **100,** and FIG. **24** is a perspective view showing enlarged a portion within FIG. **23****.**

In the example shown in FIG. **23** and FIG. **24****,** each of a plurality of disc boss portions **24'** of the hub **20** is integrated with a number of nipple boss portions **25A** among the plurality of nipple boss portions **25.** Thus, when each disc boss portion **24'** is integrated with a number of nipple boss portions **25A,** it is possible to reduce the weight of the hub **20.**

### [straddled vehicle]

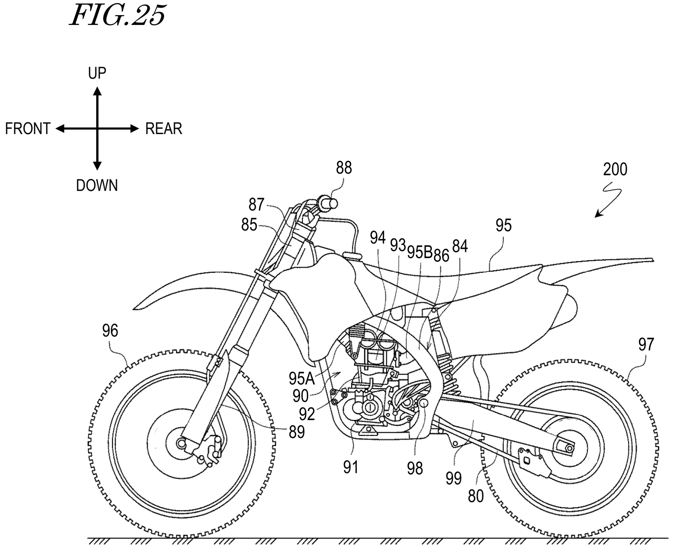

FIG. **25** shows an example of a straddled vehicle with wheels according to an embodiment of the present invention. As a straddled vehicle, FIG. **25** illustrates an off-roader type motorcycle **200** called a motocrosser. However, the straddled vehicle is not limited to an off-roader type motorcycle **200.** A straddled vehicle is any vehicle on which a rider straddles and rides. The straddled vehicle may be a motorcycle of any type, e.g., on-road type, scooter type, or moped type; it may even be a vehicle other than a motorcycle, such as a tricycle.

As shown in FIG. **25****,** the motorcycle **200** includes: a body frame **84;** an engine **90** supported by the body frame **84;** a seat **95** supported by the body frame **84;** a front wheel **96;** and a rear wheel **97.** The body frame **84** includes: a head pipe **85;** and a main frame **86** extending rearward from the head pipe **85.**

The engine **90** is supported by the main frame **86.** A steering shaft **73** is supported by the head pipe **85** so as to be capable of rotating right and left. A handle bar **88** is fixed above the steering shaft **73.** Front forks **89** are provided below the steering shaft **87.** The front wheel **96** is rotatably supported by the front forks **89.**

A pivot axis **98** is provided on the main frame **86.** The front ends of the rear arms **99** are swingingly connected to the pivot axis **98.** The rear wheel **97** is supported by the rear ends of the rear arms **99.** The rear wheel **97** and the engine **90** are linked together by a chain **80,** as an example of a motive power transmitting member.

The engine **90** includes: a crankcase **91;** a cylinder body **92** connected to the crankcase **91;** a cylinder head **93** connected to the cylinder body **92;** and a cylinder head cover **94** connected to the cylinder head **93.** An intake pipe **95A** and an exhaust pipe **95B** are connected to the cylinder head **93.**

The wheel **100** according to an embodiment of the present invention may be suitably used as the rear wheel **97** of the motorcycle **200,** for example.

As described above, a wire -spoke wheel **100** according to an embodiment of the present invention includes: an annular rim **10;** a hub **20** having a wheel shaft hole **20b** in which a wheel shaft is inserted; and a plurality of wire spokes **30** linking the rim **10** and the hub **20** together, the plurality of wire spokes **30** each including a first end **31** that is connected to the rim **10** and a second end **32** that is connected to the hub **20.** The rim **10** includes a first flange portion **11A** that is located at an end on one side of a wheel width direction **D1** and a second flange portion **11B** that is located at an end on another side of the wheel width direction **D1.** The rim **10** has a plurality of rim holes **19** through which the respective wire spokes **30** are inserted. The plurality of rim holes **19** include first rim holes **19A** made in the first flange portion **11A** and second rim holes **19B** made in the second flange portion **11B.** Each first rim holes **19A** and each second rim holes **19B** are asymmetrically shaped with respect to the central plane concerning the width direction **Pr** of the rim **10.**

In a wire-spoke wheel **100** according to an embodiment of the present invention, each first rim hole (e.g., the right rim hole) **19A** made in the first flange portion (e.g., the right flange portion) **11A** of the rim **10** and each second rim hole (e.g., the left rim hole) **19B** made in the second flange portion (e.g., the left flange portion) **11B** of the rim **10** are asymmetrically shaped with respect to the central plane concerning the width direction **Pr** of the rim **10.** When the hub **20** has a certain structure (e.g., when the hub **20** has a left-right asymmetric structure as illustrated), the kinds of wire spokes **30** to be used may increase, thereby resulting in an increased number of parts; however, each first rim hole **19A** and each second rim hole **19B** being asymmetrically shaped allows for suppressing an increase in the number of parts.

In one embodiment, an axial direction **D_{A}** of each first rim hole **19A** and an axial direction **D_{B}** of each second rim hole **19B** make mutually different angles θ_{A} and θ_{B}, respectively, with the central plane concerning the width direction **Pr** of the rim **10.**

Typically, the axial direction **D_{A}** of each first rim hole **19A** and the axial direction **D_{B}** of each second rim hole **19B** make mutually different angles θ_{A} and θ_{B}, respectively, with the central plane concerning the width direction **Pr** of the rim **10.** Consequently, each first rim hole **19A** and each second rim hole **19B** are asymmetrically shaped.

In one embodiment, the hub **20** includes a first hub subsection **20p1** that is located on the one side of the center along the wheel width direction **D1** and a second hub subsection **20p2** that is located on the other side of the center along the wheel width direction **D1,** and the plurality of wire spokes **30** include a plurality of spoke pairs **SP** each consisting of a first wire spoke **30A** linking together the first flange portion **11A** and the second hub subsection **20p2,** and a second wire spoke **30B** linking together the second flange portion **11B** and the first hub subsection **20p1.**

The wire-spoke wheel **100** may be structured so that the plurality of wire spokes **30** include a plurality of spoke pairs **SP** each consisting of: a first wire spoke **30A** that links together the first flange portion (e.g., the right flange portion) **11A** of the rim **10** and the second hub subsection (e.g., the left hub subsection) **20p2** of the hub **20;** and a second wire spoke **30B** that link together the second flange portion (e.g., the left flange portion) **11B** of the rim **10** and the first hub subsection (e.g., the right hub subsection) **20p1** of the hub **20.** Because the wire-spoke wheel **100** has such a cross structure, the wire spokes **30** can be made longer than in the case where a cross structure is not adopted, whereby energy absorption by the wire spokes **30** increases and shock absorption is improved.

In one embodiment, each of the plurality of wire spokes **30** is bent at either a first angle θ1 and a second angle θ2 which is different from the first angle θ1.

Each wire spoke **30** may be bent at either a first angle θ1 and a second angle θ2 which is different from the first angle θ1. In other words, two kinds of wire spokes **30** with respectively different bending angles may be mixedly present. This makes it easy to avoid interferences between the wire spokes **30** when adopting a cross structure.

In one embodiment, the hub **20** has an asymmetric shape with respect to a central plane concerning the width direction **Pr** of the rim **10.**

The hub **20** may have an asymmetric (i.e., a left-right asymmetric) shape with respect to the central plane concerning the width direction **Pr** of the rim **10.**

In one embodiment, the axial direction of each of the plurality of rim holes **19** is set so that each of the plurality of wire spokes **30** appears to be in a straight line in a plan view from the wheel width direction **D1.**

When the axial direction of each rim hole **19** is set so that each wire spoke **30** appears to be in a straight line in a plan view from the wheel width direction **D1,** a design improvement can be obtained. An improved assembly ease can also be obtained.

In one embodiment, the wire-spoke wheel **100** further includes a plurality of nipples **50** that fasten the second ends **32** of respective ones of the plurality of wire spokes **30** to the hub **20,** and each of the plurality of nipples **50** has a tube-shaped stem **51** and a head **52** that is continuous with one end of the stem **51.**

The wire-spoke wheel **100** may further include a plurality of nipples **50** that fasten the second ends **32** of the respective wire spokes **30** to the hub **20.** Each nipple **50** may have a tube-shaped stem **51** and a head **52** that is continuous with one end of the stem **51.**

In one embodiment, the wire-spoke wheel **100** further includes a cover member **60** that is attached to the hub **20** so as to at least partially cover the heads **52** of the plurality of nipples **50.**

When the wire-spoke wheel **100** includes a cover member **60** that is attached to the hub **20** so as to at least partially cover the heads **52** of the nipples **50,** the nipples **50** can be prevented from dropping off even when the nipples **50** become loose.

In one embodiment, the cover member **60** doubles as a rotor for wheel speed detection.

In a case where a rotor for wheel speed detection for ABS control is attached to the hub **20,** the cover member **60** doubling as a rotor for wheel speed detection allows the number of parts to be reduced.

In one embodiment, the plurality of nipples **50** include two nipples **50** juxtaposed to each other, such that an attachment path for one nipple **50A** is overlapped by the other nipple **50B.**

The plurality of nipples **50** may include two nipples **50** juxtaposed to each other, such that an attachment path for one nipple (referred to as a "first nipple") **50A** is overlapped by the other nipple (referred to as a "second nipple") **50B.** When two nipples **50** juxtaposed to each other are placed in this manner, loosening of the first nipple **50A** can be prevented by the second nipple **50B.**

In one embodiment, the hub **20** includes a plurality of disc boss portions **24'** for attaching a brake disc **70,** and a plurality of nipple boss portions **25** for attaching the plurality of nipples **50.** Each of the plurality of disc boss portions **24'** is integrated with a number of nipple boss portions **25A** among the plurality of nipple boss portions **25.**

The hub **20** may include a plurality of disc boss portions **24'** for attaching a brake disc **70** and a plurality of nipple boss portions **25** for attaching the plurality of nipples **50.** In that case, if each disc boss portion **24'** is integrated with a number of nipple boss portions **25A** among the plurality of nipple boss portions **25,** it is possible to reduce the weight of the hub **20.**

A straddled vehicle according to an embodiment of the present invention includes a front wheel **96** and a rear wheel **97,** the rear wheel **97** comprising the wire-spoke wheel **100** of any of the aforementioned configurations.

According to an embodiment of the present invention, a wire-spoke wheel that can suppress an increase in the number of parts can be provided. A wire-spoke wheel according to an embodiment of the present invention is suitably used for various types of straddled vehicles, including motorcycles.

## Claims

1. A wire-spoke wheel (100) comprising:
an annular rim (10);
a hub (20) having a wheel shaft hole (20A) in which a wheel shaft is inserted; and
a plurality of wire spokes (30) linking the rim (10) and the hub (20) together, the plurality of wire spokes (30) each including a first end (31) that is connected to the rim (30) and a second end (32) that is connected to the hub (20),
the rim (10) including a first flange portion (11A) that is located at an end on one side of a wheel width direction (D1) and a second flange portion (11B) that is located at an end on another side of the wheel width direction (D1), wherein:
the rim (10) has a plurality of rim holes (19) through which respective ones of the plurality of wire spokes (30) are inserted,
the plurality of rim holes (19) include first rim holes (19A) that are made in the first flange portion (11A) and second rim holes (19B) that are made in the second flange portion (11B); and
each first rim hole (19A) and each second rim hole (19B) are symmetrically shaped with respect to a central plane concerning a width direction (Pr) of the rim (10).

2. The wire-spoke wheel of claim 1, wherein an axial direction of each first rim hole (19A) and an axial direction of each second rim hole (19B) make mutually different (θ_{A}, θ_{B}) angles with the central plane concerning the width direction (Pr) of the rim (20).

3. The wire-spoke wheel of claim 1 or 2, wherein:
the hub (20) includes a first hub subsection (20p1) that is located on the one side of a center along the wheel width direction (Pr) and a second hub subsection (20p2) that is located on the other side of the center along the wheel width direction (Pr); and
the plurality of wire spokes (30) include a plurality of spoke pairs (30) each consisting of: a first wire spoke (30A) linking together the first flange portion (11A) and the second hub subsection (20p2); and a second wire spoke (30B) linking together the second flange portion (11B) and the first hub subsection (20pa).

4. The wire-spoke wheel of claim 3, wherein each of the plurality of wire spokes (30) is bent at either a first angle (θ1) and a second angle (θ2) which is different from the first angle (θ1).

5. The wire-spoke wheel of any one of claims 1 to 4, wherein the hub (20) has an asymmetric shape with respect to the central plane concerning the width direction (Pr) of the rim (10).

6. The wire-spoke wheel of any one of claims 1 to 5, wherein an axial direction of each of the plurality of rim holes (19) is set so that each of the plurality of wire spokes (30) appears to be in a straight line in a plan view from a wheel width direction (Pr).

7. The wire-spoke wheel of any one of claims 1 to 6, further comprising a plurality of nipples (50) that fasten the second ends (32) of respective ones of the plurality of wire spokes (30) to the hub (20),
each of the plurality of nipples (50) having:
a tube-shaped stem (51); and
a head (52) that is continuous with one end of the stem (51).

8. The wire-spoke wheel of claim 7, further comprising a cover member (60) that is attached to the hub (20) so as to at least partially cover the heads (52) of the plurality of nipples (50).

9. The wire-spoke wheel of claim 8, wherein the cover member (60) doubles as a rotor for wheel speed detection.

10. The wire-spoke wheel of any one of claims 7 to 9, wherein the plurality of nipples (50) include two nipples (50) juxtaposed to each other, such that an attachment path for one nipple (50A) is overlapped by the other nipple (50B).

11. The wire-spoke wheel of any one of claims 7 to 10, wherein:
the hub (20) includes:
a plurality of disc boss portions (24') for attaching a brake disc (70);
a plurality of nipple boss portions (25) for attaching the plurality of nipples (50); and
each of the plurality of disc boss portions (24') is integrated with a number of nipple boss portions (25A) among the plurality of nipple boss portions (25).

12. A straddled vehicle (200) comprising:
a front wheel (96); and
a rear wheel (97), wherein
the rear wheel (97) comprises the wire-spoke wheel (100) of any one of claims 1 to 11.
